# EUROPÄISCHE PATENTANMELDUNG

(11) **EP 4 067 436 A1**
(43) Veröffentlichungstag der Anmeldung: **05.10.2022**
(21) Anmeldenummer: 21165757.2
(22) Anmeldetag: 30.03.2021
(51) Int. Cl.: C08L 91/06, C10M 109/02

(54) **MAISWACHSOXIDATE UND VERESTERUNGSPRODUKTE**

(71) Anmelder: Clariant International Ltd, 4132 Muttenz (CH)
(72) Erfinder: KRATZER, Philipp, 86637 Wertingen (DE)
(74) Vertreter: Silber, Anton

(57) **Zusammenfassung**

Die Erfindung betrifft helle Maiswachsoxidate, ein Verfahren zu deren Herstellung sowie deren Verwendung zu land- oder forstwirtschaftlichen Zwecken, als Additiv in der Kunststoffverarbeitung, in Pflegemitteln, in Druckfarben und/oder in Lacken, und verseifte oder veresterte Maiswachsoxidate, hergestellt durch Verseifen bzw. Verestern der beschriebenen Maiswachsoxidate.

## Beschreibung

Die Erfindung betrifft helle Maiswachsoxidate, ein Verfahren zur Herstellung dieser Oxidationsprodukte von Maiswachs und deren Verwendung zu land- oder forstwirtschaftlichen Zwecken, als Additiv in der Kunststoffverarbeitung, in Pflegemitteln, in Druckfarben und/oder in Lacken. Gegenstand sind auch verseifte sowie veresterte Maiswachsoxidate, hergestellt durch die Verseifung bzw. Veresterung der erfindungsgemäßen Maiswachsoxidate.

Die Oxidation von fossilen und nicht-fossilen Naturwachsen mit Chromschwefelsäure ist seit Anfang des 20. Jahrhunderts bekannt und wird technisch anhand von fossilen Montanwachsen seit 1927 im heute noch betriebenen "Gersthofener Verfahren" durchgeführt. Neben fossilem Montanwachs lassen sich mit Hilfe dieser Chromsäurebasierten Verfahren auch nachwachsende Naturwachse, wie z. B. Carnaubawachs und Candelillawachs oxidieren. Ein Verfahren zur Chromsäureoxidation von Carnaubawachs wird in DE-A 10231886 beschrieben. Naturbelassene Carnauba-Wachse (fettgrau, Typ 4; mittelgelb, primagelb und flor, Typen 3 bis 1) und Roh-Montanwachs (schwarz) sind deutlich dunkel gefärbt. Die Oxidation mit Chromschwefelsäure führt zu helleren Wachsprodukten.

Bei der Oxidation von Naturwachsen mit Chromsäure kommt es allerdings zu einer Spaltung der Wachsester sowie einer in-situ-Oxidation der entstandenen Wachsalkohole zu Wachssäuren. Die Höhe der Säurezahl ist ein Maß für den Gehalt an freien Wachssäuren. Die typischen Umsätze solcher Oxidationen liegen im Bereich von 50-90% bezüglich der Estergruppen.

Die auf diese Weise gebleichten Naturwachse besitzen zusätzlich zur gewünschten Aufhellung eine höhere Verseifungszahl und höhere Säurezahl als die ungebleichten Wachse.

Hohe Säurezahlen haben oft den vorteilhaften Effekt, dass die Naturwachs-Oxidate nach der Oxidation leichter von Nebenprodukten abgetrennt werden können, da die Trennung der organischen Phase enthaltend die Wachsoxidate von der wässrigen Phase enthaltend Chromsalze und andere wasserlösliche Reaktionsprodukte begünstigt wird. Bei niedrigen Säurezahlen wurde hingegen beobachtet, dass die Phasentrennung oft nur sehr langsam oder unter Umständen gar nicht stattfindet. Wenn keine oder eine sehr langsame Phasentrennung stattfindet, ist es oft ohne großen Aufwand nicht möglich, die Naturwachs-Oxidate zuverlässig zu isolieren und aufzureinigen.

Für die Erreichung hoher Säurezahlen, die eine effiziente Phasentrennung erlauben, werden größere Mengen an Chromschwefelsäure benötigt als für die Erreichung niedriger Säurezahlen, wodurch auch größere Mengen an Chromsalzabfällen anfallen. Die Vermeidung großer Abfallmengen ist sowohl aus wirtschaftlicher als auch aus ökologischer Sicht erstrebenswert.

Typischerweise sind Phasentrennungen bei niedrigen Säurezahlen zusätzlich erschwert, wenn die eingesetzten Naturwachse einen hohen Öl-Gehalt aufweisen, sodass oft vor der Oxidation eine Vorbehandlung wie eine Entölung notwendig sein kann. Hierfür können unter Umständen große Mengen an Lösungsmitteln benötigt werden, was ebenfalls sowohl wirtschaftlich als auch ökologisch nachteilig ist.

Um ausgehend von den Naturwachs-Oxidaten mit hoher Säurezahl zu Produkten mit niedriger Säurezahl zu gelangen, kann nach der Abtrennung der Nebenprodukte die Säurezahl der Wachsoxidate, z.B. durch Veresterung der im Wachs und/oder Wachsoxidat enthaltenen Säuren mit Alkoholen, gesenkt werden. Dies führt dazu, dass zum Erreichen von Naturwachs-Oxidaten mit niedrigen Säurezahlen auch nach der Oxidation weitere Syntheseschritte benötigt werden, wodurch ebenfalls wirtschaftliche und ökologische Nachteile erwachsen. Insbesondere wenn Naturwachs-Oxidate mit niedriger Säurezahl für bestimmte Anwendungen benötigt werden, wäre es von Vorteil, auf den Einsatz großer Mengen Chromschwefelsäure und die anschließende Senkung der Säurezahl durch Veresterung sowie auf den Einsatz großer Mengen an Lösungsmittel vor der Oxidation zu verzichten.

Eine Aufgabe der vorliegenden Erfindung ist die Bereitstellung eines Verfahrens zur Herstellung eines Naturwachs-Oxidats mittels Chromschwefelsäure-Oxidation eines Naturwachses, bei dem nach der Oxidation eine Isolierung des Naturwachs-Oxidats über einen breiten Säurezahlen-Bereich möglich ist.

Es wurde überraschend gefunden, dass nach der Chromschwefelsäureoxidation von Naturwachsen eine Isolierung und Aufreinigung der Naturwachs-Oxidate trotz niedriger Säurezahlen ermöglicht wird, wenn als Naturwachs ein Maiswachs eingesetzt wird, auch dann, wenn das Maiswachs einen relativ hohen Ölgehalt hat.

Ein Erfindungsgegenstand ist ein Verfahren zur Herstellung eines Maiswachsoxidats (O), umfassend die Schritte:
i) Bereitstellen eines Maiswachses (MW),
ii) Bereitstellen einer Mischung (M) aus Chromtrioxid und Schwefelsäure;
iii) Durchführen der Oxidation des Maiswachses (MW) durch Umsetzung des Maiswachses (MW) mit der Mischung (M), um ein Maiswachsoxidat (O) zu erhalten;
iv) Beenden der Umsetzung und Ruhenlassen der in Schritt iii) erhaltenen Reaktionsmischung bis zur Trennung von organischer von der wässrigen Phase;
v) Abtrennung der organischen Phase;
vi) optionales Entfernen von Rückständen, enthaltend Chromverbindungen aus der organischen Phase, um das Maiswachsoxidat (O) in gereinigter Form zu erhalten;
vii) optionales Wiederholen der Folge von Schritten ii) bis vi), wobei anstelle des Maiswachses (MW) das Maiswachsoxidat (O), gegebenenfalls in gereinigter Form, eingesetzt wird.

Mit diesem Verfahren können helle Naturwachs-Oxidate auf Basis von Maiswachs, Maiswachsoxidate (O), die eine Säurezahl im Bereich von etwa 10 bis etwa 170 mg KOH/g aufweisen, direkt erhalten werden, ohne dass nach der Isolierung weitere Schritte notwendig sind, um die Säurezahl einzustellen.

Es wurde gefunden, dass bei Nutzung von Maiswachsen (MW) als Ausgangsmaterial die Bildung einer deutlichen Phasengrenze zwischen der organischen Phase und der wässrigen Phase in Schritt iv) bei dem erfindungsgemäßen Verfahren regelmäßig bereits bei einer Säurezahl von etwa 10 mg KOH/g zu beobachten ist. Bei Säurezahlen im Bereich von 20 bis 50 mg KOH/g ist in Schritt iv) des erfindungsgemäßen Verfahrens eine deutliche Phasengrenze meist innerhalb eines Zeitraums von unter 1 Minute zu erkennen. Bei Säurezahlen über 50 mg KOH/g ist in Schritt iv) des erfindungsgemäßen Verfahrens eine deutliche Phasengrenze oft schon innerhalb eines Zeitraums von unter 10 Sekunden erkennbar. Die hier angegebenen Zeiten wurden unter Bedingungen beobachtet, wie sie in den Beispielen angegeben sind. Bei deutlich größeren Reaktionsansätzen können die Zeiten variieren, sind jedoch auch dann deutlich kürzer als bei Oxidaten anderer Naturwachse, die unter sonst gleichen Bedingungen hergestellt werden.

Die Phasengrenze bei niedrigen bis mittleren Säurezahlen ist auch bei relativ hohen Ölgehalten des eingesetzten Maiswachses deutlich zu erkennen. Im Gegensatz dazu findet bei Reiskleiewachs-Oxidaten unter sonst gleichen Bedingungen die Phasentrennung oft erst ab einer Säurezahl von ca. 20 mg KOH/g statt, und das nur bei geringem Ölgehalt von < 5 Gew.-%, oftmals erst bei Ölgehalten < 2 Gew.-%. Bei Montanwachsen findet die Phasentrennung sogar oft erst ab einer Säurezahl von ca. 50 mg KOH/g statt.

Ein weiterer Gegenstand der Erfindung ist ein Maiswachsoxidat (O), herstellbar durch Umsetzung von Maiswachs (MW) mit einer Mischung aus Chromtrioxid und Schwefelsäure.

Es ist möglich, die Maiswachsoxidate (O) der Erfindung weiter zu modifizieren, um beispielsweise ihre Säurezahl nach der Herstellung des Maiswachsoxidats (O) weiter einzustellen und/oder andere Eigenschaften zu ändern, beispielsweise durch Veresterung oder Verseifung.

Die Veresterung wird üblicherweise mit Alkoholen, häufig mit polyvalenten Alkoholen, wie z.B. Ethylenglykol, Butylenglykol, Glycerin, Diglycerin, Trimethylolpropan, Ethylenglykol, Pentaerythritol oder Sorbitol vorgenommen.

Ein weiterer Gegenstand der Erfindung ist daher ein verestertes Maiswachsoxidat (E), herstellbar durch Umsetzen des erfindungsgemäßen Maiswachsoxidats (O) mit einem Alkohol, vorzugsweise einem mehrwertigen Alkohol, besonders vorzugsweise Ethylenglykol, Butylenglykol, Glycerin oder Pentaerythritol.

Die Verseifung wird üblicherweise mit basischen Metallsalzen, häufig mit Alkalimetallhydroxiden und/oder Erdalkalimetallhydroxiden durchgeführt. Ein weiterer Gegenstand der Erfindung ist daher ein verseiftes Maiswachsoxidat (V), herstellbar durch Umsetzen des erfindungsgemäßen Maiswachsoxidats (O) oder des erfindungsgemäßen veresterten Maiswachsoxidats (E) mit einem basischen Metallsalz, vorzugsweise einem Alkalimetallhydroxid und/oder Erdalkalimetallhydroxid, besonders vorzugsweise mit Ca(OH)₂.

Ein weiterer Gegenstand der Erfindung ist die Verwendung des erfindungsgemäßen Maiswachsoxidats (O), des erfindungsgemäßen veresterten Maiswachsoxidats (E) oder des erfindungsgemäßen verseiften Maiswachsoxidats (V) zu land- oder forstwirtschaftlichen Zwecken, als Additiv in der Kunststoffverarbeitung, in Pflegemitteln, in Druckfarben und/oder in Lacken.

Die Erfindung betrifft auch die Verwendung von Maiswachs (MW) zur Herstellung eines Naturwachs-Oxidats durch Oxidation mit einer Mischung aus Chromtrioxid und Schwefelsäure.

Maiswachs wird typischerweise aus rohem Maisöl über mehrere Verarbeitungsschritte gewonnen, die unter anderem basische Aufschlüsse des Maisöls sowie mehrere Reinigungsschritte durch chemische, thermische und/oder mechanische Trennverfahren umfassen. Ein solches Verfahren, bei dem Wachse aus rohen Pflanzenölen wie Maisöl als unerwünschtes Nebenprodukt abgetrennt werden (ca. 60-90 Gew.-%), wird in US 4272447 offenbart.

Nach Informationen der Ernährungs- und Landwirtschaftsorganisation FAO ist Mais eine der am Meisten produzierten Getreidesorten. 2018 wurden weltweit etwa 1.147 Millionen Tonnen Mais geerntet.

Bei der Verarbeitung von Roh-Mais, insbesondere dem daraus gewonnenen Maisöl, fällt Maiswachs in großen Mengen als Nebenprodukt an. Aufgrund der hohen Produktionszahlen und der weiten geographischen Verbreitung ist Maiswachs demnach ein wirtschaftlich interessantes Naturwachs.

Die chemische Zusammensetzung von Maiswachs ist trotz zahlreicher analytischer Untersuchungen mit nicht übereinstimmenden Befunden noch nicht völlig geklärt. Sicher hingegen ist die Zusammensetzung des Wachskörpers aus Wachsestern. In "The composition of corn wax" beschreibt R. L. Shriner (Journal of the American Chemical Society, 1927, 49, 1290-1294), dass Maiswachs zumindest zu einem Teil aus Myricylalkohol-Estern von C₂₂ und C₂₄ Fettsäuren besteht. In "Wax Analysis of Vegetable Oils Using Liquid Chromatography on a Double-Adsorbent Layer of Silica Gel and Silver Nitrate-Impregnated Silica Gel" legt G. Henon dar (Journal of the American Oil Chemists' Society 2001, 78, 401-410), dass Maiswachs aus rohem Maisöl Kohlenstoffkettenlängen von 44 bis 58 Kohlenstoffatomen aufweisen kann.

Die Maiswachs-Ester bestehen hauptsächlich aus Monoestern langkettiger, gesättigter, unverzweigter Monocarbonsäuren mit langkettigen, unverzweigten, aliphatischen Monoalkoholen (nachfolgend auch "genuine Ester" genannt). Vorherrschend sind im Säureanteil der Maiswachs-Ester Arachin- Behen- und Lignocerinsäure, mit den Kettenlängen C20, C22 und C24, und im Alkoholanteil der Maiswachs-Ester die Kettenlängen C24, C26, C28, C30 und C32. Daneben kann das Wachs freie Fettsäuren und weitere Bestandteile wie Squalen, Phosphorlipide und Sterylester enthalten.

Der Gehalt an Wachsestern in raffiniertem und entöltem Maiswachs liegt in der Regel bei größer als 97 Gew.%. In nicht-entöltem Maiswachs kann der Gehalt an Wachsestern, je nach Gehalt des Maisöls, auch bei nur 50 Gew.% liegen. Weitere als "Mindermengen-Bestandteile" anzusehende variable Bestandteile des Maiswachses sind die nicht näher spezifizierten "Dunkelstoffe", Squalen sowie der sogenannte "Gum-Anteil". Diese Komponenten führen meist zu einer in Farbe und Anwendbarkeit schwankenden und schwer zu reproduzierenden Produktqualität.

Als übliche Technik zur Aufhellung der braunen Maiswachse gilt die klassische Bleichung mit Wasserstoffperoxid. Wasserstoffperoxid-gebleichte Maiswachse sind gelblich und entsprechen in ihrem Estergehalt und in ihrer Säurezahl weitgehend den Ausgangswachsen. Solche Typen werden überwiegend als entölte und raffinierte Maiswachse am Markt angeboten, zeigen jedoch, da die Mindermengen-Bestandteile im Produkt verbleiben, ebenfalls schwankende Produktqualität.

Durch das erfindungsgemäße Verfahren können helle Maiswachsoxidate (O) hergestellt werden, die im Vergleich zur Bleichung mit Wasserstoffperoxid eine gleichbleibende Produktqualität aufweisen.

Die durch das erfindungsgemäße Verfahren hergestellten Maiswachsoxidate (O) haben üblicherweise lodfarbzahlen gemessen nach DIN 6162 (2014) von kleiner als 8 und Yellowness-Indices, gemessen nach ASTM E 313-20 von kleiner als 50. Es wurde jedoch gefunden, dass durch eine geeignete Wahl der Verfahrensparameter bei der Oxidation von Maiswachs gezielt lodfarbzahlen, gemessen nach DIN 6162 (2014) von kleiner als 6, oftmals kleiner als 5, beispielsweise kleiner als 2, und Yellowness-Indices, gemessen nach ASTM E 313- 20 von kleiner als 40, oftmals kleiner als 30, beispielsweise kleiner als 15 erreicht werden können.

Gleichzeitig werden Nadelpenetrationszahlen, gemessen nach DIN 51579 (2010) von kleiner als 10 mm⁻¹, oftmals kleiner als 6 mm⁻¹, beispielsweise kleiner als 4 mm⁻¹ erreicht, was insbesondere für Anwendungen vorteilhaft ist, in denen harte Wachse benötigt werden.

Das erfindungsgemäße Verfahren und die erfindungsgemäßen Produkte auf Basis von Maiswachs werden im Folgenden näher beschrieben.

Das erfindungsgemäße Verfahren zur Herstellung eines Maiswachsoxidats (O) umfasst die Schritte (bzw. besteht aus den Schritten):
ii) Bereitstellen eines Maiswachses (MW),
ii) Bereitstellen einer Mischung (M) aus Chromtrioxid und Schwefelsäure;
iii) Durchführen der Oxidation des Maiswachses (MW) durch Umsetzung des Maiswachses (MW) mit der Mischung (M), um ein Maiswachsoxidat (O) zu erhalten;
iv) Beenden der Umsetzung und Ruhenlassen der in Schritt iii) erhaltenen Reaktionsmischung bis zur Trennung der organischen Phase von der wässrigen Phase;
v) Abtrennung der organischen Phase;
vi) optionales Entfernen von Rückständen enthaltend Chromverbindungen aus der organischen Phase, um das Maiswachsoxidat (O) in gereinigter Form zu erhalten;
vii) optionales einmaliges oder mehrmaliges Wiederholen der Folge von Schritten ii) bis vi), wobei anstelle des Maiswachses (MW) das Maiswachsoxidat (O), gegebenenfalls in gereinigter Form, eingesetzt wird.

Bei dem in Schritt i) bereitgestellten Maiswachs (MW) kann es sich um ein beliebiges Maiswachs handeln.

Wenn eine niedrige bis mittlere Säurezahl des Maiswachsoxidats (O) gewünscht ist, beispielsweise 50 mg KOH/g oder niedriger, kann das Maiswachs (MW) einen Anteil an mehrfachen Estern, gebildet aus mehrwertigen Alkoholen und aliphatischen Carbonsäuren mit 8 bis 20 Kohlenstoffatomen, von bis zu 25 Gew.-%, bevorzugt bis zu 15 Gew.-%, mehr bevorzugt bis zu 10 Gew.-%, vorzugsweise bis zu 5 Gew.-%, besonders vorzugsweise bis zu 3 Gew.-% haben, bezogen auf das Gesamtgewicht des Maiswachses (MW) haben. In der Regel weist das Maiswachs (MW) einen Anteil an mehrfachen Estern, gebildet aus mehrwertigen Alkoholen und aliphatischen Carbonsäuren mit 8 bis 20 Kohlenstoffatomen von mehr als 0,1 Gew.-% auf.

Der gewünschte Anteil an mehrfachen Estern gebildet aus mehrwertigen Alkoholen und aliphatischen Carbonsäuren mit 8 bis 20 Kohlenstoffatomen kann in diesem Fall bereits in dem Maiswachs im Rohzustand enthalten sein, kann allerdings auch durch eine Vorbehandlung des Maiswachses eingestellt werden. Vorzugsweise ist der Anteil bereits in dem Maiswachs (MW) im Rohzustand enthalten. In diesem Fall ist es bevorzugt, dass das Maiswachs (MW) nicht vorbehandelt wird.

Sind hingegen Anteile an mehrfachen Estern, gebildet aus mehrwertigen Alkoholen und aliphatischen Carbonsäuren mit 8 bis 20 Kohlenstoffatomen, deutlich über 25 Gew.-% enthalten, kann es vorteilhaft sein, das Maiswachs (MW) vor der Bereitstellung in Schritt i) vorzubehandeln. In diesem Fall ist es von Vorteil, wenn die Vorbehandlung keine Verseifung der im Maiswachs (MW) enthaltenen Ester umfasst.

Stattdessen ist eine Extraktion der mehrfachen Ester, gebildet aus mehrwertigen Alkoholen und aliphatischen Carbonsäuren mit 8 bis 20 Kohlenstoffatomen, mit einem oder mehreren organischen Lösungsmitteln bevorzugt, wobei die Extraktion durchgeführt wird, bis der gewünschte Anteil an mehrfachen Estern, gebildet aus mehrwertigen Alkoholen und aliphatischen Carbonsäuren mit 8 bis 20 Kohlenstoffatomen erreicht wird. Geeignet sind hierfür beliebige organische Lösungsmittel, die Öle und Fette lösen können, beispielsweise Ethylacetat oder Aceton, vorzugsweise Ethylacetat.

Bei den mehrfachen Estern, gebildet aus mehrwertigen Alkoholen und aliphatischen Carbonsäuren mit 8 bis 20 Kohlenstoffatomen, handelt es sich vorzugsweise um Diund Tri-glyceride von aliphatischen Carbonsäuren mit 8 bis 20 Kohlenstoffatomen, insbesondere um Öle, die von Natur aus in Mais enthalten sind, vor Allem um Maisöl.

Entsprechend kann es sich bei der Extraktion mit einem organischen Lösungsmittel um eine Entölung handeln. In diesem Fall kann der Anteil an mehrfachen Estern, gebildet aus mehrwertigen Alkoholen und aliphatischen Carbonsäuren mit 8 bis 20 Kohlenstoffatomen auch als Ölgehalt des Maiswachses bezeichnet werden.

Vorzugsweise wird das Maiswachs (MW), unabhängig von dem Anteil an mehrfachen Estern gebildet aus mehrwertigen Alkoholen und aliphatischen Carbonsäuren mit 8 bis 20 Kohlenstoffatomen im Rohzustand, zu keinem Zeitpunkt vor der Oxidation durch Verseifung vorbehandelt.

Bevorzugt sind Maiswachse (MW), die eine Mischung aus linearen Estern mit einer zahlenmittleren Gesamt-Kohlenstoffkettenlänge von 45 bis 55 Atomen, vorzugsweise von 47 bis 53 Kohlenstoffatomen umfassen. Ferner sind Maiswachse (MW) bevorzugt, die eine Mischung aus linearen Estern umfasst, von denen mindestens 30 Massen-%, bevorzugt mindestens 40 Massen-%, besonders bevorzugt mindestens 50 massen-%, eine Gesamt-Kohlenstoffkettenlänge von höchstens 52 Kohlenstoffatomen, vorzugsweise von 40 bis 52 Kohlenstoffatomen haben.

Ferner weist das Maiswachs (MW) bevorzugt eine Säurezahl von kleiner als 20 mg KOH/g, mehr bevorzugt von kleiner als 15 mg KOH/g, vorzugsweise von kleiner als 10 mg KOH/g, besonders vorzugsweise von 1 bis 8 mg KOH/g auf. Außerdem weist das Maiswachs (MW) bevorzugt eine Verseifungszahl von kleiner als 150 mg KOH/g, mehr bevorzugt von kleiner als 120 mg KOH/g, vorzugsweise von 30 bis 100 mg KOH/g, besonders vorzugsweise von 60 bis 95 mg KOH/g auf.

Die in Schritt ii) bereitgestellte Mischung (M) aus Chromtrioxid und Schwefelsäure kann eine beliebige Mischung sein, sofern diese in der Lage ist, oxidierbare Bestandteile von Maiswachs zu oxidieren. Häufig werden solche Mischungen aus Chromtrioxid und Schwefelsäure auch als Chomschwefelsäure bezeichnet. Bei der Schwefelsäure handelt es sich bevorzugt um konzentrierte Schwefelsäure mit einem Anteil an Schwefelsäure von mindestens 90 Gew.-%, vorzugsweise mindestens 96 Gew.-%, besonders vorzugsweise mindestens 99 Gew.-%. Diese kann optional rauchende Schwefelsäure sein, also zusätzlich Schwefeltrioxid enthalten. Die Konzentration von Chromtrioxid in der Mischung (M) beträgt vorzugsweise 50 bis 200 g/L, besonders vorzugsweise 70 bis 150 g/L, ganz besonders vorzugsweise 80 bis 120 g/L.

In Schritt iii) des erfindungsgemäßen Verfahrens wird die Oxidation des Maiswachses (MW) durch Umsetzung des Maiswachses (MW) mit der Mischung (M) durchgeführt, um ein Maiswachsoxidat (O) zu erhalten. Bevorzugt wird die Umsetzung unter Rühren und bei einer Temperatur von 70 bis 200 °C, mehr bevorzugt von 80 bis 150 °C, vorzugsweise von 90 bis 140 °C, besonders vorzugsweise von 105 bis 130 °C durchgeführt.

Das Gewichtsverhältnis von insgesamt eingesetztem Chromtrioxid zu eingesetztem Maiswachs (MW) ist vorzugsweise von 1:6 bis 3:1, insbesondere von 1:5 bis 2:1, besonders vorzugsweise von 2:5 bis 6:5. Ist das Verhältnis kleiner als 1:6, findet die Oxidation in zu geringem Umfang statt, um eine signifikante Aufhellung des Maiswachses zu bewirken. Ist das Verhältnis größer als 3:1, findet die Spaltung der Esterbindungen in besonders großem Ausmaß statt, sodass abhängig von den übrigen Bedingungen die Einhaltung der gewünschten Säurezahlen im Produkt erschwert werden kann. Wenn Schritt vii) des erfindungsgemäßen Verfahrens durchgeführt wird, ist das Gewichtsverhältnis von eingesetztem Chromtrioxid zu eingesetztem Maiswachs (MW) vorzugsweise bei jeder Durchführung des Schritts iii) kleiner als 6:5.

Dieser Schritt iii) kann optional in mehrere Schritte unterteilt sein. Beispielsweise kann Schritt iii) das Vorlegen der Mischung (M) und anschließendes Zugeben des Maiswachses (MW) umfassen. Alternativ kann Schritt iii) das Vorlegen des Maiswachses (MW) und anschließendes Zugeben der Mischung (M) umfassen. In diesen Fällen kann die Zugabe der jeweils zweiten Komponente (MW) oder (M) zum Beispiel portionsweise, kontinuierlich oder in einer Charge erfolgen, vorzugsweise portionsweise oder kontinuierlich, besonders vorzugsweise portionsweise.

In Ausführungsformen, in denen die Umsetzung in Schritt iii) bei einer Temperatur von 70 bis 200 °C durchgeführt wird, kann optional die Temperatur des Maiswachses (MW) und/oder der Mischung (M) während der Zugabe von der Reaktionstemperatur abweichen und erst nach erfolgter Zugabe der zweiten Komponente auf den erforderlichen Wert von bevorzugt 70 bis 200 °C, mehr bevorzugt 80 bis 150 °C, vorzugsweise von 90 bis 140 °C, besonders vorzugsweise von 105 bis 130 °C eingestellt werden.

Beispielsweise kann die Temperatur bei der Zugabe einen Wert von 60 bis 150 °C, vorzugsweise von 70 bis 130 °C, besonders vorzugsweise 80 bis 110 °C haben. Vorzugsweise liegt das Maiswachs (MW) während der Zugabe in geschmolzener Form vor.

In einer Ausführungsform wird die bereitgestellte Mischung (M) aus Chromtrioxid und Schwefelsäure vorgelegt und auf eine Temperatur von 60 bis 150 °C, vorzugsweise von 70 bis 130 °C, besonders vorzugsweise 80 bis 110 °C erwärmt, und das Maiswachs (MW) in festem Zustand portionsweise zugegeben. Nach erfolgter Zugabe wird die Temperatur auf 70 bis 200 °C, bevorzugt von 80 bis 150 °C, vorzugsweise von 90 bis 140 °C, besonders vorzugsweise von 105 bis 130 °C eingestellt und die Oxidation durchgeführt.

In einer anderen Ausführungsform wird die bereitgestellte Mischung (M) aus Chromtrioxid und Schwefelsäure vorgelegt und auf eine Temperatur von 60 bis 130 °C erwärmt, und das Maiswachs (MW) in geschmolzenem Zustand, vorzugsweise bei einer Temperatur von 60 bis 150 °C, vorzugsweise von 70 bis 130 °C, besonders vorzugsweise 80 bis 110 °C, portionsweise zugegeben. Nach erfolgter Zugabe wird die Temperatur auf 70 bis 200 °C, bevorzugt von 80 bis 150 °C, vorzugsweise von 90 bis 140 °C, besonders vorzugsweise von 105 bis 130 °C eingestellt und die Oxidation durchgeführt.

In einer weiteren Ausführungsform wird das Maiswachs (MW) vorgelegt und bei einer Temperatur von 60 bis 150 °C, vorzugsweise von 70 bis 130 °C, besonders vorzugsweise 80 bis 110 °C geschmolzen, und die Mischung (M) aus Chromtrioxid und Schwefelsäure portionsweise nicht temperiert zugegeben. Nach erfolgter Zugabe wird die Temperatur auf 70 bis 200 °C, bevorzugt von 80 bis 150 °C, vorzugsweise von 90 bis 140 °C, besonders vorzugsweise von 105 bis 130 °C eingestellt und die Oxidation durchgeführt.

In einer anderen Ausführungsform wird das Maiswachs (MW) vorgelegt und bei einer Temperatur von 60 bis 150 °C, vorzugsweise von 70 bis 130 °C, besonders vorzugsweise 80 bis 110 °C geschmolzen, und die Mischung (M) aus Chromtrioxid und Schwefelsäure portionsweise heiß, vorzugsweise bei einer Temperatur von 60 bis 150 °C, vorzugsweise von 70 bis 130 °C, besonders vorzugsweise 80 bis 110 °C , zugegeben. Nach erfolgter Zugabe wird die Temperatur auf 70 bis 200 °C, bevorzugt von 80 bis 150 °C, vorzugsweise von 90 bis 140 °C, besonders vorzugsweise von 105 bis 130 °C eingestellt und die Oxidation durchgeführt.

In einer weiteren Ausführungsform werden Maiswachs (MW) und die Mischung (M) aus Chromtrioxid und Schwefelsäure zusammen bei Raumtemperatur vorgelegt und langsam auf eine Temperatur von 70 bis 200 °C, bevorzugt von 80 bis 150 °C, vorzugsweise von 90 bis 140 °C, besonders vorzugsweise von 105 bis 130 °C erwärmt, und bei dieser Temperatur die Oxidation durchgeführt.

Zumindest die Oxidation bei 70 bis 200 °C, 80 bis 150 °C, 90 bis 140 °C, oder 105 bis 130 °C, vorzugsweise auch die Zugabe des Maiswachses (MW) und/oder der Mischung (M) findet unter Rühren statt. Das Rühren kann hierbei auf beliebige Weise erfolgen, beispielsweise mit einem mechanisch betriebenen Rührwerk, oder einem magnetisch betriebenen Rührwerk. Vorzugsweise erfolgt das Rühren mit einem mechanisch betriebenen Rührwerk, besonders vorzugsweise mit einem mechanisch betriebenen Rührwerk umfassend einen KPG-Rührer.

Die Rührgeschwindigkeit in Schritt iii) liegt vorzugsweise in einem Bereich von 100 bis 500 U/min (Umdrehungen pro Minute), besonders vorzugsweise von 120 bis 300 U/min, ganz besonders vorzugsweise von 170 bis 250 U/min, da bei einer Rührgeschwindigkeit unter 100 U/min die für die effiziente Oxidation benötigte Vermischung nicht gegeben sein könnte und bei einer Rührgeschwindigkeit von über 500 U/min ein erhöhtes Risiko der Bildung einer nicht mehr trennbaren Emulsion besteht.

Die Oxidation des Maiswachses in Schritt iii) erfolgt bevorzugt über einen Zeitraum von mindestens 30 Minuten, mehr bevorzugt 45 Minuten bis 12 Stunden, noch mehr bevorzugt 1 bis 8 Stunden, vorzugsweise von 2 bis 5 Stunden, besonders vorzugsweise von 3 bis 4,5 Stunden.

Außerdem ist es von Vorteil, wenn der Reaktionsmischung aus Maiswachs (MW) und der Mischung (M) keine Oxidationspromotoren zugesetzt werden, da diese häufig zur Spaltung der Esterbindungen führen können und daher die Säurezahl in dem Maiswachsoxidat (O) erhöhen können.

Vorzugsweise werden daher keine Oxidationspromotoren, insbesondere keine Oxidationspromotoren wie z.B. Emulgatoren (z.B. Alkansulfonate, fluorierte Alkansulfonate), Tenside, polymere Tenside, stickstoffhaltige Kationtenside, Phasentransferkatalysatoren, Fenton Reagenzien, Metallsalze, Salzsäure oder dergleichen bei der Oxidation eingesetzt.

Nach Erreichen der gewünschten Reaktionsdauer wird in Schritt iv) die Umsetzung beendet und die Reaktionsmischung bis zur Trennung der organischen Phase von der wässrigen Phase ruhen gelassen. Unter "Beenden der Umsetzung" ist zu verstehen, dass das Rühren unterbrochen und das Heizen beendet wird.

Hierbei beginnt die Trennung der aufschwimmenden organischen Phase, enthaltend das Maiswachsoxidat (O), von der absinkenden wässrigen Phase, enthaltend Schwefelsäure und Chromverbindungen. Optional kann die Reaktionsmischung vor dem Ruhenlassen in eine Vorrichtung überführt werden, in der nach der Trennung der organischen Phase von der wässrigen Phase eine Abtrennung der organischen Phase erleichtert wird. Ein Beispiel für eine solche Vorrichtung ist ein Scheidetrichter. Andere Vorrichtungen zu diesem Zweck sind dem Fachmann bekannt und hier anwendbar.

Die benötigte Zeit bis zum Erreichen der Phasengrenze ist säurezahlabhängig. Überraschend konnte für das erfindungsgemäße Verfahren beobachtet werden, dass sich zeitnah nach dem "Beenden der Umsetzung" in Schritt iv) eine Trennung der organischen Phase von der wässrigen Phase durch eine klare Phasengrenze zeigte. Bei Säurezahlen im Bereich von 20-50 mg KOH/g konnte eine klare Phasengrenze bei einer Trennzeit von weniger als 1 Minute beobachtet werden. Bei Säurezahlen > 50 mg KOH/g war dies innerhalb von wenigen Sekunden der Fall.

Das Bilden einer Phasengrenze nach dem "Beenden der Umsetzung" konnte sogar bei sehr niedrigen Säurezahlen von etwa 10 mg KOH/g beobachtet werden und ist eher untypisch für durch Chromschwefelsäure oxidierte Wachse. So kann durch die beschriebene Synthesevorschrift eine Phasengrenze bei Reiswachsen erst ab einer Säurezahl von ca. 20 mg KOH/g und bei Montanwachsen erst ab einer Säurezahl von ca. 50 mg KOH/g unter sonst gleichen Bedingungen beobachtet werden. Dies ist sowohl aus ökonomischer als auch aus ökologischer Sicht ein deutlicher Vorteil von Maiswachsoxidaten (O) gegenüber Oxidaten anderer Naturwachse.

In Schritt v) wird die organische Phase enthaltend das Maiswachsoxidat abgetrennt. Dies kann beispielsweise mittels Scheidetrichter erfolgen. Alternativ kann die aufschwimmende organische Phase mithilfe von geeigneten technischen Mitteln abgeschöpft werden.

Ebenso ist ein Abgießen der organischen Phase über einen Gefäßrand möglich. Wege zur Abtrennung von organischen Phasen von wässrigen Phasen nach einer Phasenseparation sind dem Fachmann grundsätzlich bekannt und hier anwendbar.

Des Weiteren kann optional in Schritt vi) die abgetrennte organische Phase enthaltend das Maiswachsoxidat weiter aufgearbeitet werden, um Rückstände enthaltend Chromverbindungen aus der organischen Phase zu entfernen und damit das Maiswachsoxidat in gereinigter Form zu erhalten.

Die Aufarbeitung kann auf beliebige Weise erfolgen, die für die Trennung von polaren und/oder wasserlöslichen Substanzen von organischen Substanzen geeignet ist. Beispielsweise kann eine chromatographische Aufreinigung der organischen Phase oder eine Filtration über Kieselgel erfolgen.

Vorzugsweise erfolgt das Entfernen von Rückständen enthaltend Chromverbindungen durch Waschen der organischen Phase mit einer wässrigen Lösung von Oxalsäure und/oder Schwefelsäure. Alternativ kann das Entfernen von Rückständen enthaltend Chromverbindungen vorzugsweise durch Waschen der organischen Phase mit Wasser erfolgen. Alternativ kann das Entfernen von Rückständen enthaltend Chromverbindungen vorzugsweise durch Zentrifugieren der organischen Phase erfolgen.

Unter "Waschen" ist hierbei jeweils das Vermischen der organischen Phase mit dem jeweiligen Mittel zum Waschen und anschließende Phasentrennung entsprechend Schritten iv) und v) zu verstehen.

In einer bevorzugten Ausführungsform erfolgt das Entfernen von Rückständen enthaltend Chromverbindungen durch einfaches oder mehrfaches Waschen der organischen Phase mit einer wässrigen Lösung von Oxalsäure und Schwefelsäure, gefolgt von dem einfachen oder mehrfachen Waschen der organischen Phase mit Wasser.

In einer weiteren bevorzugten Ausführungsform erfolgt das Entfernen von Rückständen enthaltend Chromverbindungen durch einfaches oder mehrfaches Waschen der organischen Phase mit einer wässrigen Lösung von Oxalsäure und Schwefelsäure, gefolgt von dem Zentrifugieren der organischen Phase.

In einer weiteren bevorzugten Ausführungsform erfolgt das Entfernen von Rückständen enthaltend Chromverbindungen durch einfaches oder mehrfaches Waschen der organischen Phase mit Wasser, gefolgt von dem Zentrifugieren der organischen Phase.

In einer besonders bevorzugten Ausführungsform erfolgt das Entfernen von Rückständen enthaltend Chromverbindungen durch einfaches oder mehrfaches Waschen der organischen Phase mit einer wässrigen Lösung von Oxalsäure und Schwefelsäure, gefolgt von dem einfachen oder mehrfachen Waschen der organischen Phase mit Wasser, gefolgt von dem Zentrifugieren der organischen Phase.

Optional kann im Schritt vii) die Folge der Schritte ii) bis vi) wiederholt werden, wobei anstelle des Maiswachses (MW) das Maiswachsoxidat (O), gegebenenfalls in gereinigter Form, eingesetzt wird. Vorzugsweise wird die Folge der Schritte ii) bis vi) nicht wiederholt.

In einer bevorzugten Ausführungsform ist das erfindungsgemäße Verfahren ein Verfahren zur Herstellung von Maiswachsoxidaten (O) umfassend die Schritte:
i) Bereitstellen eines Maiswachses (MW), vorzugsweise eines entölten Maiswachses (MW);
ii) Bereitstellen einer Mischung (M) aus Chromtrioxid und Schwefelsäure;
iii) Durchführen der Oxidation des Maiswachses (MW) durch Umsetzung des Maiswachses (MW) mit der Mischung (M) unter Rühren und bei einer Temperatur von 70 bis 200 °C, bevorzugt von 80 bis 150 °C, vorzugsweise von 90 bis 140 °C, besonders vorzugsweise von 105 bis 130 °C um ein Maiswachsoxidat (O) zu erhalten;
iv) Beenden der Umsetzung und Ruhenlassen der in Schritt iii) erhaltenen Reaktionsmischung bis zur Trennung der organischen Phase von der wässrigen Phase;
v) Abtrennung der organischen Phase;
vi) optionales Entfernen von Rückständen enthaltend Chromverbindungen aus der organischen Phase, um das Maiswachsoxidat (O) in gereinigter Form zu erhalten;
vii) optionales Wiederholen der Folge von Schritten ii) bis vi), wobei anstelle des Maiswachses (MW) das Maiswachsoxidat (O), gegebenenfalls in gereinigter Form, eingesetzt wird,
   wobei die Oxidation in Schritt iii) über einen Zeitraum von mindestens 30 Minuten bevorzugt 45 Minuten bis 12 Stunden, mehr bevorzugt 1 bis 8 Stunden, vorzugsweise von 2 bis 5 Stunden, besonders vorzugsweise von 3 bis 4,5 Stunden erfolgt.

Bei dieser Ausführungsform können besonders gezielt lodfarbzahlen, gemessen nach DIN 6162 (2014) von kleiner als 6, oftmals kleiner als 5, beispielsweise kleiner als 2, und/oder Yellowness-Indices, gemessen nach ASTM E 313-20 von kleiner als 40, oftmals kleiner als 30, beispielsweise kleiner als 15 erreicht werden.

Ein weiterer Gegenstand der Erfindung ist ein Maiswachsoxidat (O) erhältlich durch Umsetzung von Maiswachs (MW) mit einer Mischung (M) aus Chromtrioxid und Schwefelsäure.

Bevorzugt hat das erfindungsgemäße Maiswachsoxidat (O) eine Säurezahl von etwa 10 bis etwa 170 mg KOH/g, mehr bevorzugt von 10 bis 140 mg KOH/g, mehr bevorzugt von 11 bis 130 mg KOH/g, noch mehr bevorzugt von 15 bis 110 mg KOH/g. In einer Ausführungsform hat das erfindungsgemäße Maiswachsoxidat (O) eine Säurezahl von etwa 10 bis unter 20 mg KOH/g.

In einer alternativen Ausführungsform hat das erfindungsgemäße Maiswachsoxidat (O) eine Säurezahl von etwa 20 bis etwa 50 mg KOH/g. In einer weiteren alternativen Ausführungsform hat das erfindungsgemäße Maiswachsoxidat (O) eine Säurezahl von über 50 bis etwa 170 mg KOH/g. In einer weiteren Ausführungsform hat das erfindungsgemäße Maiswachsoxidat (O) Säurezahl kleiner als 140 mg KOH/g, bevorzugt kleiner als 110 mg KOH/g, mehr bevorzugt kleiner als 60 mg KOH/g, besonders bevorzugt kleiner als 40 mg KOH/g, insbesondere bevorzugt kleiner als 20 mg KOH/g.

Ferner hat das erfindungsgemäße Maiswachsoxidat (O) bevorzugt eine lodfarbzahl kleiner als 6, mehr mehr bevorzugt von kleiner als 5, noch mehr bevorzugt kleiner als 3, vorzugsweise kleiner als 2, besonders vorzugsweise kleiner als 1,5 (gemessen nach DIN 6162 (2014)). Alternativ hat das erfindungsgemäße Maiswachsoxidat (O) bevorzugt einen Yellowness-Index von kleiner als 50, mehr bevorzugt von kleiner als 30, noch mehr bevorzugt von kleiner als 20, vorzugsweise kleiner als 15, besonders vorzugsweise kleiner als 10 (gemessen nach ASTM E 313 - 20).

Das erfindungsgemäße Maiswachsoxidat (O) hat ferner vorzugsweise einen Anteil an mehrfachen Estern, gebildet aus mehrwertigen Alkoholen und aliphatischen Carbonsäuren mit 8 bis 20 Kohlenstoffatomen, kleiner als 5 Gew.-%, besonders vorzugsweise kleiner als 3 Gew.-%, ganz besonders vorzugsweise kleiner als 1 Gew.-%, bezogen auf das Gesamtgewicht des Maiswachsoxidats (O).

In einer Ausführungsform enthält das Maiswachsoxidat (O)
a) 3 bis 40 Gew.-%, bezogen auf das Gesamtgewicht des Maiswachsoxidats (O), freie aliphatische Carbonsäuren mit 8 bis 36 Kohlenstoffatomen;
b) 0 bis 10 Gew.-%, bezogen auf das Gesamtgewicht des Maiswachsoxidats (O), freie aliphatische Alkohole mit 24 bis 36 Kohlenstoffatomen;
c) 0 bis 5 Gew.-%, bezogen auf das Gesamtgewicht des Maiswachsoxidats (O), freie aliphatische Dicarbonsäuren mit 10 bis 30 Kohlenstoffatomen;
d) 30 bis 97 Gew.-%, bezogen auf das Gesamtgewicht des Maiswachsoxidats (O), genuine Ester mit 40 bis 66 Kohlenstoffatomen; und
e) 0 bis 30 Gew.-%, bezogen auf das Gesamtgewicht des Maiswachsoxidats (O), weitere im Maiswachs enthaltene natürliche Bestandteile,
wobei die Summe von a), b), c), d) und e) 100 Gew.-%, bezogen auf das Gesamtgewicht des Maiswachsoxidats (O) ergibt.

In einer bevorzugten Ausführungsform enthält das Maiswachsoxidat (O)
a) 3 bis 15 Gew.-%, bezogen auf das Gesamtgewicht des Maiswachsoxidats (O), freie aliphatische Carbonsäuren mit 8 bis 36 Kohlenstoffatomen;
b) 0 bis 7 Gew.-%, bezogen auf das Gesamtgewicht des Maiswachsoxidats (O), freie aliphatische Alkohole mit 24 bis 36 Kohlenstoffatomen;
c) 0 bis 4 Gew.-%, bezogen auf das Gesamtgewicht des Maiswachsoxidats (O), freie aliphatische Dicarbonsäuren mit 10 bis 30 Kohlenstoffatomen;
d) 65 bis 97 Gew.-%, bezogen auf das Gesamtgewicht des Maiswachsoxidats (O), genuine Ester mit 40 bis 66 Kohlenstoffatomen; und
e) 0 bis 15 Gew.-%, bezogen auf das Gesamtgewicht des Maiswachsoxidats (O), weitere im Maiswachs enthaltene natürliche Bestandteile,
wobei die Summe von a), b), c), d) und e) 100 Gew.-%, bezogen auf das Gesamtgewicht des Maiswachsoxidats (O) ergibt.

In einer bevorzugten Ausführungsform enthält das Maiswachsoxidat (O)
a) 3 bis 10 Gew.-%, bezogen auf das Gesamtgewicht des Maiswachsoxidats (O), freie aliphatische Carbonsäuren mit 8 bis 36 Kohlenstoffatomen;
b) 0 bis 5 Gew.-%, bezogen auf das Gesamtgewicht des Maiswachsoxidats (O), freie aliphatische Alkohole mit 24 bis 36 Kohlenstoffatomen;
c) 0 bis 3 Gew.-%, bezogen auf das Gesamtgewicht des Maiswachsoxidats (O), freie aliphatische Dicarbonsäuren mit 10 bis 30 Kohlenstoffatomen;
d) 75 bis 97 Gew.-%, bezogen auf das Gesamtgewicht des Maiswachsoxidats (O), genuine Ester mit 40 bis 66 Kohlenstoffatomen; und
e) 0 bis 15 Gew.-%, bezogen auf das Gesamtgewicht des Maiswachsoxidats (O), weitere im Maiswachs enthaltene natürliche Bestandteile,
wobei die Summe von a), b), c), d) und e) 100 Gew.-%, bezogen auf das Gesamtgewicht des Maiswachsoxidats (O) ergibt.

Ebenfalls Gegenstand der Erfindung ist ein Maiswachsoxidat (O) mit einer Säurezahl kleiner als 50 mg KOH/g und einem Anteil an mehrfachen Estern gebildet aus mehrwertigen Alkoholen und aliphatischen Carbonsäuren mit 8 bis 20 Kohlenstoffatomen kleiner als 5 Gew.-%, bezogen auf das Gesamtgewicht des Maiswachsoxidats (O), enthaltend:
a) 3 bis 25 Gew.-%, bezogen auf das Gesamtgewicht des Maiswachsoxidats (O), freie aliphatische Carbonsäuren mit 8 bis 36 Kohlenstoffatomen;
b) 0 bis 10 Gew.-%, bezogen auf das Gesamtgewicht des Maiswachsoxidats (O), freie aliphatische Alkohole mit 24 bis 36 Kohlenstoffatomen;
c) 0 bis 5 Gew.-%, bezogen auf das Gesamtgewicht des Maiswachsoxidats (O), freie aliphatische Dicarbonsäuren mit 10 bis 30 Kohlenstoffatomen;
d) 50 bis 97 Gew.-%, bezogen auf das Gesamtgewicht des Maiswachsoxidats (O), genuine Ester mit 40 bis 66 Kohlenstoffatomen; und
e) 0 bis 15 Gew.-%, bezogen auf das Gesamtgewicht des Maiswachsoxidats (O), weitere im Maiswachs enthaltene natürliche Bestandteile,
wobei die Summe von a), b), c), d) und e) 100 Gew.-%, bezogen auf das Gesamtgewicht des Maiswachsoxidats (O) ergibt.

Vorzugsweise ist hierbei Lignocerinsäure zu maximal 5 Gew.-%, besonders vorzugsweise maximal 3 Gew.-%, bezogen auf das Gesamtgewicht des Maiswachsoxidats (O), in dem Maiswachsoxidat (O) enthalten.

Die Gewichtsanteile und Kettenlängenverteilungen können beispielsweise mittels Gaschromatographie gemessen werden.

Des Weiteren haben die erfindungsgemäßen Maiswachsoxidate typischerweise einen Tropfpunkt gemessen nach DIN ISO 2176 (1997) zwischen 70°C und 90°C, bevorzugt zwischen 75°C und 80°C.

Bevorzugt haben die erfindungsgemäßen Maiswachsoxidate eine Nadelpenetrationszahl (NPZ) gemessen nach DIN 51579 (2010) von kleiner 10 mm⁻¹, bevorzugt kleiner 6 mm⁻¹, besonders bevorzugt kleiner 4 mm⁻¹, ganz besonders bevorzugt kleiner als 3 mm⁻¹.

Vorzugsweise erhöht sich durch die Oxidation des Maiswachses die Verseifungszahl gemessen nach DIN ISO 3681 (2019) um höchstens 70%, bevorzugt um höchstens 40%, besonders bevorzugt um höchstens 30%. Die Erhöhung der Verseifungszahl kann mechanistisch durch die Spaltung der Wachsester und die anschließende Oxidation der Wachsalkohole zu Säuren erklärt werden. Zusätzlich wird ein Teil ungesättigter Kohlenstoff-Kohlenstoffbindungen durch das Oxidationsmittel gespalten und ebenfalls zu Säuren aufoxidiert.

Damit ist die Verseifungszahl auch eine Maßzahl für die tatsächlich stattgefundene Oxidation in Abgrenzung zur Verseifung, bei der sich die Verseifungszahl bekanntlich nicht ändert, und in Abgrenzung zu anderen Bleichverfahren, bei denen es lediglich zu einer Aufhellung des Produkts kommt. Beispielsweise bewirkt die Bleichung von Maiswachs mit Wasserstoffperoxid keine chemische Modifikation des Wachses im Sinne der Erfindung, da hier lediglich verfärbende Verunreinigungen und Nebenbestandteile beseitigt werden, ohne dass die eigentliche Wachsstruktur verändert wird.

Das erfindungsgemäße Maiswachsoxidat (O) zeichnet sich typischerweise durch eine besonders gute Thermostabilität, gemessen nach DIN 51006 (2005) mit einem Massenverlust bis zum Erreichen einer Temperatur von 300 °C (Heizrate: 5 °C/min) von kleiner 50%, bevorzugt kleiner 20%, besonders bevorzugt kleiner 10% aus.

Weiterer Gegenstand der Erfindung ist ein verestertes Maiswachsoxidat (E) hergestellt durch Veresterung oder Umsetzung des oben beschriebenen Maiswachsoxidats (O) mit einem Alkohol. Bevorzugte Alkohole sind mehrwertige Alkohole, beispielsweise Ethylenglykol, Butylenglykol, Glycerin, Diglycerin, Trimethylolpropan, Pentaerythritol oder Sorbitol, etc.. Bei der Veresterung wird bevorzugt ein Gewichtsverhältnis von Alkohol zu Maiswachsoxidat (O) von 1:100 bis 1:5, besonders bevorzugt von 1:50 bis 1:10, ganz besonders bevorzugt 1:20 bis 1:12 gewählt.

Bevorzugt zeichnen sich die veresterten Produkte neben der nachwachsenden Rohstoffbasis durch eine besonders gute Thermostabilität, gemessen nach DIN 51006 (2005) mit einem Massenverlust bis zum Erreichen einer Temperatur von 300 °C (Heizrate: 5 °C/min) von kleiner 15%, bevorzugt kleiner 10% aus. Bevorzugt haben die veresterten Produkte eine Säurezahl von kleiner als 40 mg KOH/g, besonders bevorzugt von kleiner als 30 mg KOH/g, ganz besonders bevorzugt von kleiner als 20 mg KOH/g Ebenfalls Gegenstand der Erfindung ist die Verwendung der erfindungsgemäßen Maiswachsoxidate (O) oder der erfindungsgemäßen verseiften Maiswachsoxidate (V) oder der erfindungsgemäßen veresterten Maiswachsoxidate (E) zu land- oder forstwirtschaftlichen Zwecken, als Additiv in der Kunststoffverarbeitung, in Pflegemitteln, in Druckfarben und/oder in Lacken.

Weiterer Gegenstand der Erfindung ist ein verseiftes Maiswachsoxidat (V) hergestellt durch Verseifen des oben beschriebenen Maiswachsoxidats (O) oder des oben beschriebenen veresterten Maiswachsoxidats (E) mit einem basischen Metallsalz, ausgewählt aus der Gruppe bestehend aus Metallhydroxiden (z.B. NaOH, KOH, Ca(OH)₂ und Zn(OH)₂, etc.), Metalloxiden (z.B. CaO, etc.), Metallcarbonaten (z.B. Na₂CO₃, CaCO₃, etc.) oder mit wässrigen Laugen (wie z.B. NaOH, KOH, etc.). Bevorzugt sind Alkalimetallhydroxide und/oder Erdalkalimetallhydroxide, insbesondere NaOH, KOH und/oder Ca(OH)₂. Ganz besonders bevorzugt ist Ca(OH)₂.

Bei der Verseifung wird bevorzugt ein Gewichtsverhältnis von basischem Metallsalz zu Maiswachsoxidat (O) von 1:100 bis 1:5, besonders bevorzugt von 1:50 bis 1:10 gewählt.

Entsprechende Herstellvorschriften finden sich beispielhaft etwa in DE4019167 oder in EP1010728. Bevorzugt zeichnen sich die verseiften Produkte neben der nachwachsenden Rohstoffbasis durch eine besonders gute Thermostabilität, gemessen nach DIN 51006 (2005) mit einem Massenverlust bis zum Erreichen einer Temperatur von 300 °C (Heizrate: 5 °C/min) von kleiner 10%, bevorzugt kleiner 5% aus. Bevorzugt haben die verseiften Produkte eine Säurezahl von kleiner als 40 mg KOH/g, besonders bevorzugt von kleiner als 25 mg KOH/g, ganz besonders bevorzugt von kleiner als 15 mg KOH/g

Ein weiterer Erfindungsgegenstand ist die Verwendung von Maiswachs (MW) zur Herstellung eines Naturwachs-Oxidats durch Oxidation mit einer Mischung (M) aus Chromtrioxid und Schwefelsäure.

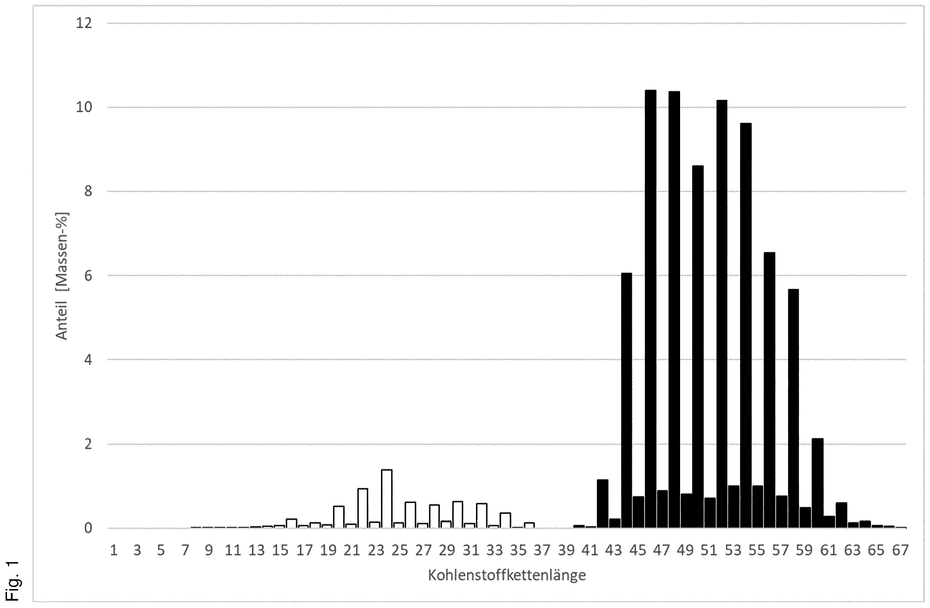

Die Erfindung wird durch die nachfolgenden Beispiele, Figuren 1-3 und Ansprüche näher erläutert.

### Substanzcharakterisierung

Die in Tabelle 1 aufgeführten Standardmethoden, die auch in der Charakterisierung von Montanwachsen und Montanwachs-Derivaten angewandt werden, dienen zur Bestimmung der Kennzahlen von Maiswachsen, Maiswachsoxidaten und weiteren Derivaten der Maiswachse.

**Tabelle 1**

| | Methode |
|---|---|
| Säurezahl (SZ) [mg KOH/g] | ISO 2114 (2002) |
| Verseifungszahl (VZ) [mg KOH/g] | ISO 3681 (2019) |
| Tropfpunkt (TP) [°C] | ISO 2176 (1997) |
| Schmelzpunkt (SP) [°C] | DIN EN ISO 11357-1 (2017) |
| Schmelzenthalpie (SE) [J/g] | DIN EN ISO 11357-1 (2017) |
| Ölgehalt (ÖG) [Gew.-%] | AOCS Ja 4-46 (2017) |
| Thermogravimetrische Analyse (TGA), Gew.-%, von 25 bis 300°C bei 5K/min, dann 30min bei 300 °C. Messung des Masseverlusts bei Erreichen von 300 °C und nach 30 min bei 300 °C | DIN 51006 (2005) |
| lodfarbzahl (IFZ) | DIN 6162 (2014) |
| Yellowness-Index (YI) | ASTM E 313 - 20 |
| Ca-Gehalt [Gew.-%] (CaG) | DGF M-IV 4 (1963) |
| Nadelpenetrationszahl [mm⁻¹] (NPZ) | DIN 51579 (2010) |

Die Kettenlängenverteilungen der Bestandteile der Maiswachsoxidate wurden mittels Gaschromatographie bestimmt. Als Vergleichssubstanzen dienten Wachssäuren und Wachsalkohole mit Kohlenstoffkettenlängen zwischen C6 und C36.

Wachsester mit C44 bis C58 wurden durch Kombination der Modellsubstanzen dargestellt. Um die Peaks der Gaschromatogramme der Maiswachse zu identifizieren wurde zu einer Wachsprobe jeweils eine definierte Menge der einzelnen Komponenten zugegeben und eine deutliche Zunahme der Fläche des entsprechenden Peaks beobachtet. Die Messbedingungen sind in Tabelle 2 dargestellt.

**Tabelle 2**

| | |
|---|---|
| Säule | Agilent Technologies HP-1 (DB-1) Length 15m I.D.0,25mm Film 0,10µm |
| Detektor | 310°C FID |
| Injektor | 300°C Split 1:100 |
| Trägergas | Helium |
| Lösungsmittel | Toluol |
| Konzentration | 30mg/ml |
| Injektionsmenge | 1 µl |
| Temperaturprogramm | 40 bis 320°C 5K/min; 50min bei 320°C halten |

Als Rohstoffe wurden als erfindungsgemäße Beispiele zwei verschiedene Maiswachse (MW 1 - 2) und als Vergleichsbeispiele zwei Reiskleiewachse (RBW 1 - 2), jeweils im Rohzustand eingesetzt. Die Eigenschaften der Maiswachse und des Reiskleiewachse im Rohzustand sind in Tabelle 3 dargestellt.
Die Reiskleiewachse wurden derart gewählt, dass deren Säurezahlen, Verseifungszahlen und Ölgehalte Werte aufweisen, die zwischen denen der eingesetzten Maiswachse liegen.

**Tabelle 3 (Methoden, Abkürzungen und Einheiten in Tabelle 1)**

| Naturwachs | SZ | VZ | TP | SP | SE | ÖG | TGA |
|---|---|---|---|---|---|---|---|
| MW 1 | 2,0 | 80,1 | 78 | 81 | -219 | 2,4 | 2,3 / 17,9 |
| MW 2 | 7,1 | 90,0 | 77 | 80 | -203 | 9,7 | 5,4 / 20,0 |
| RBW 1* | 6,0 | 88,0 | 74 | 78 | -178 | 8,5 | 3,5 / 14,0 |
| RBW 2* | 4,0 | 84,0 | 76 | 80 | -184 | 4,3 | 3,4 / 16,6 |

| | | | | | | | |
|---|---|---|---|---|---|---|---|
| *Vergleichsbeispiel | | | | | | | |

### Beispiele 1 bis 8 und Vergleichsbeispiele 9 und 10

In einem 3 L Reaktionsgefäß mit Rührer, Temperaturfühler, Tropftrichter und Rückflusskühler wurde die in Tabelle 4 angegebene Menge Chromtrioxid in 96%-ige Schwefelsäure (Konzentration: 100g CrO₃/L) vorgelegt und auf 100°C erwärmt. Anschließend wurde geschmolzenes (90 °C) Naturwachs im Rohzustand portionsweise zugegeben. Die Temperatur des Reaktionsgemisches wurde auf 110°C eingestellt und 4 h mit ca. 200 U/min mit einem KPG-Rührer gerührt. Das Heizen sowie Rühren wurde eingestellt. Sobald sich die Phasen getrennt haben wurde die wässrige Phase abgetrennt. Dieser Vorgang wird in den Beispielen 3 und 7 zweimal durchgeführt, in Beispiel 8 dreimal. In Beispielen 9 und 10 (Vergleichsbeispiele) fand keine Phasentrennung statt. Demnach konnten die Eigenschaften des Reiskleiewachsoxidats nicht untersucht werden.

Die organische Phase wurde durch Waschen mit einer wässrigen Lösung von Oxalsäure und Schwefelsäure und anschließend durch Waschen mit Wasser von Chromrückständen befreit, in warme Zentrifugengläser abgelassen und zentrifugiert. Die Bedingungen der Oxidationen und Eigenschaften der Maiswachsoxidate sind in Tabelle 4 angegeben.

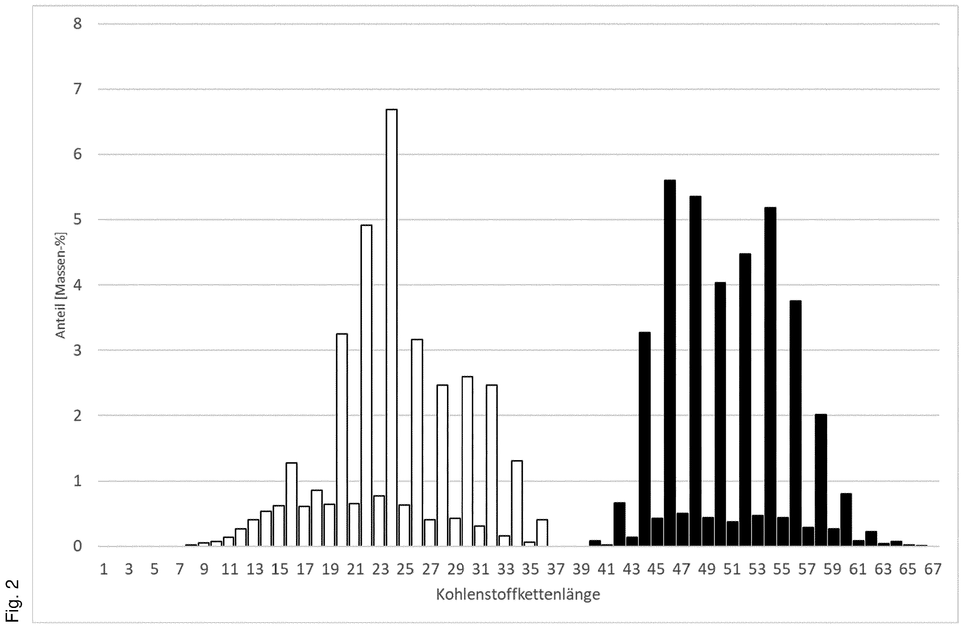

Die für Beispiel 2 gemessene Kettenlängenverteilung ist in Fig. 1 dargestellt und für Beispiel 7 in Fig. 2, wobei freie Säuren mit ungefüllten Balken dargestellt sind, und Ester mit gefüllten.

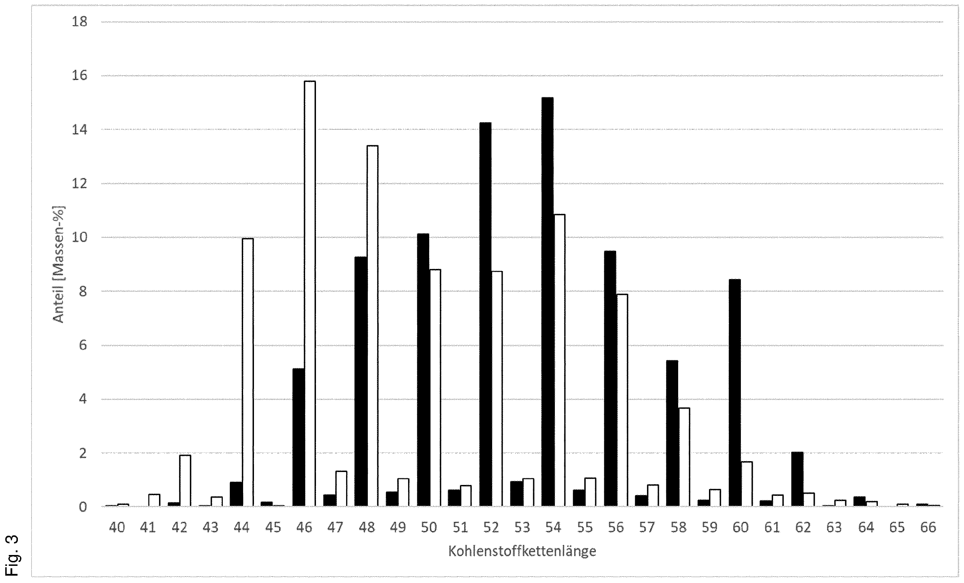

Die Kettenlängenverteilung der Ester im eingesetzten Maiswachs (ungefüllte Balken) ist in Fig. 3 gezeigt. Die zahlenmittlere Kettenlänge wurde auf 50 Kohlenstoffatome bestimmt.

Im Vergleich dazu ist in Fig. 3 zusätzlich die Kettenlängenverteilung eines Reiskleiewachses mit einer zahlenmittleren Kettenlänge von 53 Kohlenstoffatomen dargestellt (gefüllte Balken). Auf der Abszisse ist jeweils die Kohlenstoffkettenlänge aufgetragen, auf der Ordinate der Anteil der jeweiligen Kohlenstoffkettenlänge an der gesamten Kettenlängenverteilung in Massen-%, jeweils bestimmt aus den Peakflächen des Gaschromatogramms.

Aus den Beispielen 1 bis 8 ist zu erkennen, dass die Maiswachsoxidate eine helle Eigenfarbe mit einer lodfarbzahl kleiner 5 und einem Yellowness-Index kleiner 30 haben. Gleichzeitig wurden Säurezahlen in einem weiten Bereich erreicht, der von einem sehr niedrigen Wert von 11 mg KOH/g bis zu einem hohen Wert von 128 mg KOH/g reicht.

Im Gegensatz dazu hat bei den Vergleichsbeispielen 9 und 10, in denen Reiskleiewache eingesetzt wurden, keine Phasentrennung stattgefunden, sodass kein Produkt isoliert werden konnte. Dies ist überraschend, da die Säurezahl, die Verseifungszahl, der Ölgehalt und die eingesetzte Menge des Reiskleiewachses zwischen den entsprechenden Werten der eingesetzten Maiswachse liegen.

In Vergleichsbeispiel 11 konnte zwar eine Phasentrennung beobachtet werden, diese hat allerdings trotz des relativ niedrigen Ölgehalts (4,3 Gew.-%) des Reiskleiewachses und der relativ hohen Säurezahl des Produkts (35 mg KOH/g) 300 Minuten (5 Stunden) gedauert. Bei ähnlichen Säurezahlen (27 bzw. 36 mg KOH/g) fand die Phasentrennung in Beispielen 4 und 5 trotz deutlich höheren Ölgehalts des Maiswachses (9,7 Gew.-%) deutlich schneller statt.

Gleichzeitig wurden viel bessere lodfarbzahlen und Yellowness-Indices der Maiswachsoxidate beobachtet.

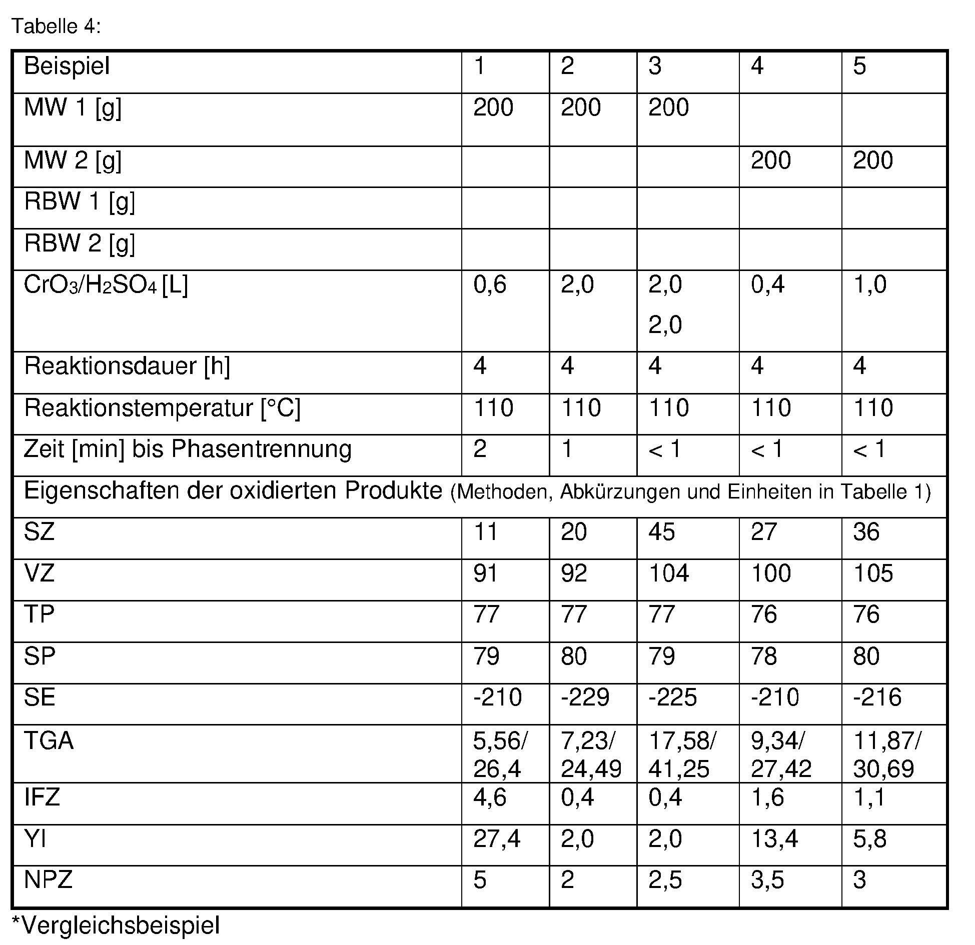

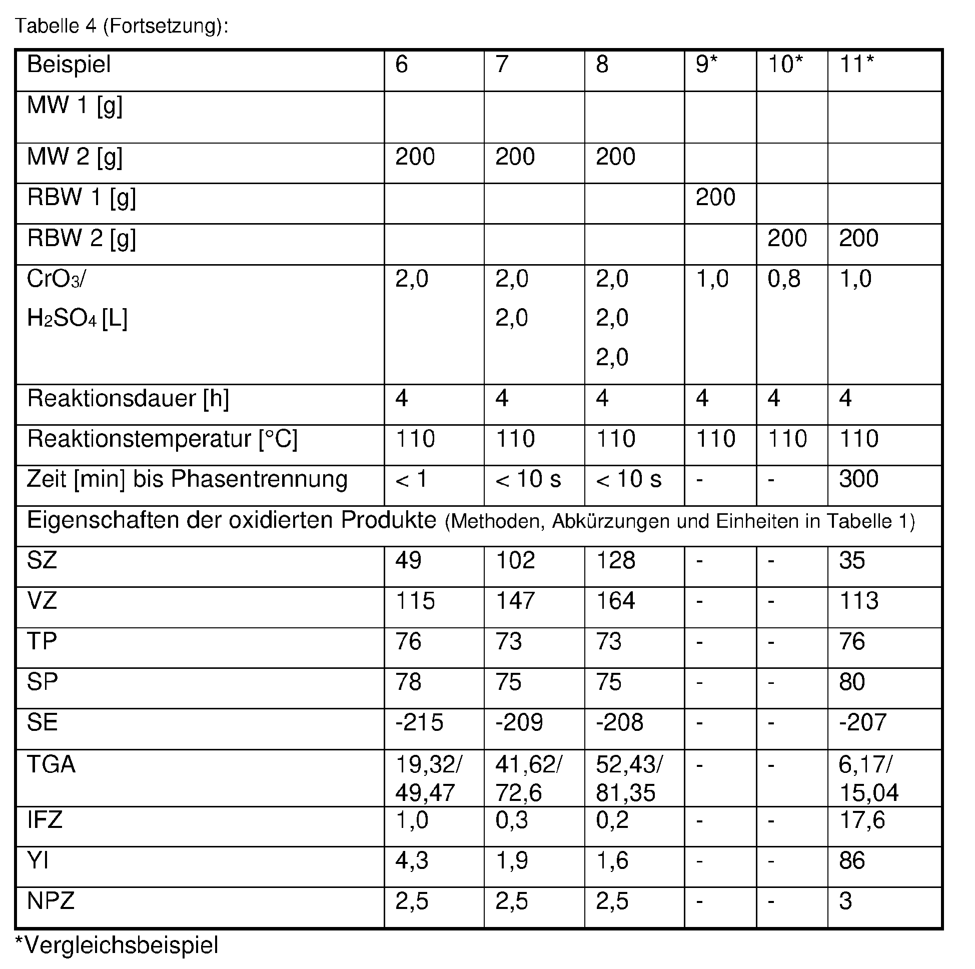

Daraus ist erkennbar, dass durch Chromschwefelsäure-Oxidation von Maiswachs (MW) eine größere Bandbreite an Naturwachs-Oxidaten in hoher Qualität hergestellt werden kann, als es bei Reiskleiewachs üblich ist.

### Beispiele 12 bis 15:

In einem 1 L Reaktionsgefäß mit Rührer, Temperaturfühler, Tropftrichter und Rückflusskühler werden die Maiswachsoxidate aus Beispielen 3, 5, 6 und 7 unter Stickstoffatmosphäre aufgeschmolzen und mit der in Tabelle 5 angegebenen Menge Ca(OH)₂ versetzt. Das Reaktionsgemisch wird bis zum Erreichen der angegebenen Säurezahl gerührt und anschließend die Reaktionsmischung im heißen Zustand druckfiltriert.

**Tabelle 5**

| Beispiel | 12 | 13 | 14 | 15 |
|---|---|---|---|---|
| Maiswachsoxidat Beispiel 3 [g] | 200 | | | |
| Maiswachsoxidat Beispiel 5 [g] | | 200 | | |
| Maiswachsoxidat Beispiel 6 [g] | | | 200 | |
| Maiswachsoxidat Beispiel 7 [g] | | | | 200 |
| Ca(OH)₂ [g] | 6,6 | 5,8 | 7,2 | 17,6 |
| Reaktions-dauer [min] | 20 | 80 | 100 | 20 |
| Reaktionstemperatur [°C] | 120 | 120 | 120 | 120 |

| Eigenschaften der verseiften Produkte (Methoden, Abkürzungen und Einheiten in Tabelle 1) | | | | |
|---|---|---|---|---|
| SZ | 9 | 6 | 10 | 6 |
| VZ | 92 | 80 | 71 | 45 |
| TP | 107 | 92 | - | - |
| SP | 80 | 82 | 80 | 80 |
| SE | -186 | -196 | -197 | -147 |
| TGA | 4,31/9,20 | 2,30/8,57 | 3,26/8,39 | 4,78/16,17 |
| CaG | 1,48 | 1,35 | 1,74 | 4,20 |

Aus den Beispielen 12 bis 15 ist zu erkennen, dass durch Verseifung der Maiswachsoxidate mit Ca(OH)₂ verseifte Produkte mit niedrigen Säurezahlen kleiner als 15 mg KOH/g hergestellt werden können, die sich insbesondere für Anwendungen eignen, die eine hohe Thermostabilität erforderlich machen.

### Beispiele 16 bis 18

In einem 1 L Reaktionsgefäß mit Rührer, Temperaturfühler, Tropftrichter und Rückflusskühler wird das Maiswachsoxidat aus Beispiel 7 unter Stickstoffatmosphäre aufgeschmolzen und mit der in Tabelle 6 angegebenen Menge an Alkohol sowie 0,1 g Methansulfonsäure versetzt. Das Reaktionsgemisch wird bis zum Erreichen der angegebenen Säurezahl gerührt, das gebildete Wasser abdestilliert und anschließend die Reaktionsmischung im heißen Zustand druckfiltriert.

**Tabelle 6**

| Beispiel | 16 | 17 | 18 |
|---|---|---|---|
| Maiswachsoxidat Beispiel 7 [g] | 100 | 100 | 100 |
| Ethylenglykol [g] | 5,1 | | |
| Glycerin [g] | | 5,5 | |
| Pentaerythritol [g] | | | 7,0 |
| Reaktionsdauer [h] | 10 | 14 | 11 |
| Reaktionstemperatur [°C] | 120 | 127 | 132 |

| Eigenschaften der verseiften Produkte (Methoden, Abkürzungen und Einheiten in Tabelle 1) | | | |
|---|---|---|---|
| SZ | 14 | 15 | 14 |
| VZ | 144 | 148 | 148 |
| TP | 73 | 74 | 73 |
| SP | 71 | 74 | 74 |
| SE | 196 | 163 | 151 |
| TGA | 7,96/26,87 | 7,30 / 18,46 | 5,28/ 11,59 |

Aus den Beispielen 12 bis 14 ist zu erkennen, dass durch Veresterung der Maiswachsoxidate mit Ethylenglykol, Glycerin oder Pentaerythritol veresterte Produkte mit niedrigen Säurezahlen kleiner als 20 mg KOH/g einfach hergestellt werden können, die sich insbesondere für Anwendungen eignen, die eine hohe Thermostabilität erforderlich machen..

## Patentansprüche

1. Verfahren zur Herstellung von Maiswachsoxidaten (O) umfassend die Schritte:
i) Bereitstellen eines Maiswachses (MW),
ii) Bereitstellen einer Mischung (M) aus Chromtrioxid und Schwefelsäure;
iii) Durchführen der Oxidation des Maiswachses (MW) durch Umsetzung des Maiswachses (MW) mit der Mischung (M), um ein Maiswachsoxidat (O) zu erhalten;
iv) Beenden der Umsetzung und Ruhenlassen der in Schritt iii) erhaltenen Reaktionsmischung bis zur Trennung der organischen Phase von der wässrigen Phase;
v) Abtrennung der organischen Phase;
vi) optionales Entfernen von Rückständen enthaltend Chromverbindungen aus der organischen Phase, um das Maiswachsoxidat (O) in gereinigter Form zu erhalten;
vii) optionales Wiederholen der Folge von Schritten ii) bis vi), wobei anstelle des Maiswachses (MW) das Maiswachsoxidat (O), gegebenenfalls in gereinigter Form, eingesetzt wird.

2. Verfahren gemäß Anspruch 1, wobei das Gewichtsverhältnis von insgesamt eingesetztem Chromtrioxid zu eingesetztem Maiswachs (MW) von 1:6 bis 3:1 ist.

3. Verfahren gemäß Anspruch 1 oder 2, wobei das Entfernen von Rückständen enthaltend Chromverbindungen gemäß Schritt vi) durchgeführt wird und mindestens einen, vorzugsweise mindestens zwei, besonders vorzugsweise alle der Schritte via), vib) oder vic) umfasst:
via) Waschen der organischen Phase mit einer wässrigen Lösung von Oxalsäure und/oder Schwefelsäure;
vib) Waschen der organischen Phase mit Wasser;
vic) Zentrifugieren der organischen Phase.

4. Verfahren gemäß mindestens einem der Ansprüche 1 bis 3, wobei das Maiswachs (MW) einen Gehalt an mehrfachen Estern, gebildet aus mehrwertigen Alkoholen und aliphatischen Carbonsäuren mit 8 bis 20 Kohlenstoffatomen, von bis zu 25 Gew.-% hat.

5. Verfahren gemäß mindestens einem der Ansprüche 1 bis 4, wobei die Umsetzung in Schritt iii) unter Rühren und bei einer Temperatur von 70 bis 200 °C durchgeführt wird.

6. Verfahren gemäß mindestens einem der Ansprüche 1 bis 5, wobei die Konzentration von Chromtrioxid in der Mischung (M) von 50 bis 200 g/L beträgt.

7. Verfahren gemäß mindestens einem der Ansprüche 1 bis 6, wobei die Oxidation in Schritt iii) über einen Zeitraum von mindestens 30 Minuten durchgeführt wird.

8. Verfahren gemäß mindestens einem der Ansprüche 1 bis 7, wobei das Maiswachs (M) eine Säurezahl von kleiner als 20 mg KOH/g aufweist.

9. Maiswachsoxidat (O), das erhältlich ist durch Umsetzung von Maiswachs (MW) mit einer Mischung (M) aus Chromtrioxid und Schwefelsäure.

10. Maiswachsoxidat (O) gemäß Anspruch 9, erhältlich durch ein Verfahren gemäß mindestens einem der Ansprüche 1 bis 8.

11. Maiswachsoxidat (O) gemäß Anspruch 9 oder 10, wobei das Maiswachsoxidat eine Säurezahl von etwa 10 bis etwa 170 mg KOH/g hat.

12. Verestertes Maiswachsoxidat (E), das erhältlich ist durch Umsetzen des Maiswachsoxidats (O) gemäß mindestens einem der Ansprüche 9 bis 11 mit einem Alkohol, vorzugsweise einem mehrwertigen Alkohol, besonders vorzugsweise Ethylenglykol, Butylenglykol, Glycerin, Diglycerin, Trimethylolpropan, Pentaerythritol oder Sorbitol.

13. Verseiftes Maiswachsoxidat (V), das erhältlich ist durch Verseifen des Maiswachsoxidats (O) gemäß mindestens einem der Ansprüche 9 bis 11 oder des veresterten Maiswachsoxidats (E) gemäß Anspruch 12 mit einem basischen Metallsalz, vorzugsweise einem Alkalimetallhydroxid und/oder Erdalkalimetallhydroxid, besonders vorzugsweise Ca(OH)₂.

14. Verwendung des Maiswachsoxidats (O) gemäß mindestens einem der Ansprüche 9 bis 11, des verseiften Maiswachsoxidats (V) gemäß Anspruch 13 oder des veresterten Maiswachsoxidats (E) gemäß Anspruch 12 zu land- oder forstwirtschaftlichen Zwecken, als Additiv in der Kunststoffverarbeitung, in Pflegemitteln, in Druckfarben und/oder in Lacken.

15. Verwendung von Maiswachs (MW) zur Herstellung eines Naturwachs-Oxidats durch Oxidation mit einer Mischung (M) aus Chromtrioxid und Schwefelsäure.
